# EUROPÄISCHE PATENTSCHRIFT

(11) **EP 3 442 927 B1**
(45) Veröffentlichungstag und Bekanntmachung des Hinweises auf die Patenterteilung: **13.01.2021**
(21) Anmeldenummer: 17724311.0
(22) Anmeldetag: 11.04.2017
(51) Int. Cl.: C04B 28/02, C04B 28/04, C04B 38/02, C04B 40/02

(54) **VERFAHREN ZUR HERSTELLUNG VON PORENBETONFORMKÖRPERN**
METHOD FOR PRODUCING AERATED CONCRETE MOULDED BODIES
PROCÉDÉ DE FABRICATION DE CORPS MOULÉS EN BÉTON CELLULAIRE

(30) Priorität: 11.04.2016 DE 102016106642
(43) Veröffentlichungstag der Anmeldung: 20.02.2019
(73) Patentinhaber: MegaPore R&D GmbH, 10785 Berlin (DE)
(72) Erfinder: SIEVERS, Thomas, 22087 Hamburg (DE)
(74) Vertreter: Müller Schupfner & Partner Patent- und Rechtsanwaltspartnerschaft mbB
(86) Internationale Anmeldenummer: PCT/DE2017/000099
(87) Internationale Veröffentlichungsnummer: WO 2017/177996

(56) Entgegenhaltungen:
- EP-A1- 0 069 095
- DE-A1- 2 221 678
- DE-A1- 2 547 908
- DE-A1- 10 131 360
- JP-A- 2000 271 924

## Beschreibung

Die Erfindung betrifft ein Verfahren zur Herstellung von Porenbetonformkörpern mit einem Raumgewicht von 100 bis 1600 kg/m³, vorzugsweise 200 bis 800 kg/m³, insbesondere bevorzugt 350 bis 650 kg/m³.

Die Porenbetonformkörper können Wandelemente bilden oder Teile von Wandelementen die jeweils bezogen auf einen Porenbetonformkörper vom Fussboden bis zur Decke reichen. Der Porenbetonformkörper kann Ausnehmungen für Fenster, Türen oder Durchgänge aufweisen, die durch Verwendung entsprechender Formen vor der Aushärtung geschaffen wurden.

### Stand der Technik

Poren- und Schaumbetone sind Betonarten mit niedriger Dichte, sogenannte Leichtbetone. Beide werden aus sehr feinkörnigen mineralischen Komponenten hergestellt und sind durch das Vorhandensein einer bedeutenden Menge künstlich erzeugter und möglichst geschlossener Poren in Form von luft- oder gasgefüllten Zellen gekennzeichnet. Die feinen Zellen, in der Regel mit mittleren Durchmessern von 0,2 bis 1,5 mm, sollen gleichmäßig im Betonkörper verteilt und durch dünne und möglichst stabile Zwischenwände getrennt sein, die die tragende räumliche Matrix des Baustoffes bilden. Aufgrund der geringen Dichte sind Poren- und Schaumbetone wärmeisolierend, weisen relativ hohe Druckfestigkeiten in Bezug auf die Dichten auf, sind nicht brennbar und schallisolierend.

Mit der Bezeichnung Schaumbeton sind aus dem Stand der Technik Leichtbetone bekannt, welche unter Verwendung von Wasser, hydraulischen Bindemitteln und Schaum und i.d.R. Additiven zur Verbesserung der Fließfähig hergestellt werden. Beim Einmischverfahren wird der Schaumbeton unter Zugabe eines physikalischen Schaumbildners in einem Zwangsmischer hergestellt. Es ist aber auch möglich zunächst eine Bindemittelsuspension herzustellen und dann Bindemittelsuspension und mittels Schaumgenerator hergestellte stabile Schäume zum Endprodukt zu vermischen.

Ein Nachteil dieser Produkte ist das im Verhältnis zu Porenbeton größere Schrumpfverhalten, eine höhere Dichte bei gleicher Druckfestigkeit, eine unkontrollierte Porenstruktur und Porengröße, d.h. in der Regel weniger Poren und solche von wenig einheitlicher Größe bzw. das Vorhandensein vieler nicht voneinander abgegrenzter verbundener Poren, und ein langsames Aushärten.

Porenbeton, früher auch als Gasporenbeton oder unter der Bezeichnung Ytong® bekannt, ist ein verhältnismäßig leichter, hochporöser, mineralischer Baustoff auf der Grundlage von einem hydraulischen Bindemittel, beispielsweise Branntkalk, Portlandzement und einer mineralischen Zuschlagkomponente wie feingemahlenem Quarzsand sowie Wasser. Zu seiner Herstellung wird eine Mischung aus vorgenannten Stoffen unter Zusatz von einem Treibmittel hergestellt, diese in eine Form gegossen und nach dem Auftreiben in Autoklaven bei Temperaturen zwischen 180 und 220 °C und einem Druck von deutlich über 2 bar bis zu 12 bar innerhalb von 6 bis 16 Stunden ausgehärtet. Porenbeton enthält Gasporen mit Porendurchmessern von 0,2 bis 1,5 mm.

Die grundlegenden Anforderungen an den Baustoff Porenbeton sind in Deutschland und teilweise Europa in den DIN-Normen DIN EN 771 1-4, DIN V 20000-404, DIN V 4165-100, DIN 4166 und DIN 4223 geregelt. Es gibt derzeit die genormten Festigkeitsklassen 2, 4, 6 und 8, was bedeutet, dass die Druckfestigkeit der Porenbetonformkörper einer Festigkeitsklasse, jeweils gemessen in N/mm² von 2, 4, 6 oder 8 nicht unterschreiten darf. Jeder Festigkeitsklasse sind mehrere Rohdichteklassen zugeordnet. Diese maximalen Rohdichten liegen für die Festigkeitsklasse 2 zwischen 350 und 500 kg/m³, für die Festigkeitsklasse 4 zwischen 500 und 800 kg/m³, für die Festigkeitsklasse 6 zwischen 650 und 800 und für die Festigkeitsklasse 8 bei 800 kg/m³. Den Festigkeitsklassen und Rohdichten sind auch jeweils eine Wärmeleitfähigkeitsklasse zugeordnet, und zwar für die Festigkeitsklasse 2 zwischen 0,09 und 0,12, für die Festigkeitsklasse 4 zwischen 0,12 und 0,21, für die Festigkeitsklasse 6 zwischen 0,16 und 0,21 und für die Festigkeitsklasse 8 bei 0,21 W/mK.

Porenbetonprodukte belegen in Deutschland mit zunehmender wirtschaftlicher Bedeutung Platz drei hinsichtlich des Marktanteils unter den Mauerwerksbaustoffen. Längst ist Porenbeton aber auch als internationaler Baustoff etabliert und weltweit verbreitet.

Ein wesentlicher Nachteil von Porenbeton ist der hohe Energieaufwand bei der Herstellung durch eine Dampf-Aushärtung in Autoklaven bei Überdruck und durch das notwendige Feinmahlen des Quarzsandes mit einer Mahlfeinheit zwischen 5000 und 10000 Blaine, der einen hohen Anteil an den eingesetzten Rohstoffen darstellt. Ein weiterer Nachteil ist die hohe Wasseraufnahme von autoklaviertem Porenbeton, die eine ungeschützte Verwendung in Außen- und Nassbereichen nicht zulässt und auch die Verwendung bei Regen und/oder hohen Luftfeuchtigkeit einschränkt. Eine weitere Einschränkung besteht bei der Herstellung von autoklaviertem Po-renbeton durch die Bauform und den Durchmesser von Autoklaven. Aufgrund der Herstellung in Autoklaven können Porenbetonformkörper bisher nur in der Dimension Länge dimensionsfrei hergestellt werden. Die Höhe bzw. Breite werden bestimmt durch die Treibhöhe (< 75 cm) sowie den Abmessungen der Autoklaven bzw. Gießformen. Die Herstellung kompletter Wände und Decken mit einer Breite bzw. Höhe von größer 75 cm, wie in der Fertigteileindustrie üblich, ist somit nicht möglich.

Produktionsbedingt ist es auch nicht möglich, Sicht-, Nutz- und Schutzflächen im Herstellungsprozess zu integrieren. Treibhöhen von größer 40 cm ergeben produktionsbedingt höhere Schwankungen der Dichte in der Matrix, da ein größeres Gewicht auf die unteren Bereiche einwirkt. Die A-Zahl von Porenbetonformkörpern liegt bei den oben genannten Festigkeits-klassen generell bei größer 500. Weder Schaumbeton noch Porenbeton weisen aufgrund der hohen Wasseraufnahme eine Frostbeständigkeit auf. Aus der EP 0069095 A1 ist die Herstellung von Isoliermaterial unter Verwendung von leichten Zuschlagsstoffen in Form von Granulen bekannt. Die Granulen als Zwischenprodukt werden unter Autoklavenhärtung aus Luftporenbeton hergestellt, wobei unter Überdruck ausgehärtet und dann zerkleinert wird. Überdies werden größere Mengen an Wasser bei der Herstellung des Luftporenbetons eingesetzt. JP 2000271924 A offenbart die Aushärtung von Porenbeton-Dämmplatten im Autoklaven bei Temperaturen, die mehr als doppelt so hoch sind wie in der vorliegenden Anmeldung.

### Aufgabe der vorliegenden Erfindung

Aufgabe der vorliegenden Erfindung ist es einen Porenbeton mit einer geringen Dichte, niedriger Wasseraufnahme und möglichst hohen Druckwerten herzustellen. Gleichzeitig soll die Herstellung wirtschaftlich erfolgen, d.h. unter Einsatz kostengünstiger Materialien, mit geringem apparativem Aufwand und bei niedrigem Energieverbrauch. Je geringer die Dichte ist, desto besser ist die Wärmeleitfähigkeit. Je höher die Druckwerte sind, desto größer ist das Einsatzgebiet als Baustoff bis hin zum Konstruktionsbaustoff.

Eine hohe Wasseraufnahmefähigkeit ist jedoch von Nachteil und verringert die Einsatzgebiete und verschlechtert die Wärmeleitfähigkeit. Auch ist die Verwendung von Autoklaven zu vermeiden. Weiterhin sollen Sicht-, Nutz- und/oder Schutzflächen im Herstellungsprozess aufgebracht werden und nicht nur hinterher auf der Baustelle im verbauten Zustand.

### Zusammenfassung der vorliegenden Erfindung

Die Erfindung ist durch die unabhängigen Patentansprüche gekennzeichnet. Bevorzugte Ausführungsformen sind Gegenstand der Unteransprüche oder nachfolgend beschrieben.

Das Verfahren zur Herstellung von Porenbetonformkörpern umfasst:
(a) das Aussetzen einer Zusammensetzung umfassend zumindest
   - 10 bis 32 Gew.%, insbesondere bevorzugt 18 bis 25 Gew.%, Wasser, und
   - größer 5 Gew.%, vorzugsweise größer 5 bis 90 Gew.%, insbesondere bevorzugt 10 bis 80 Gew.% Zement als Bindemittel,
      einem Mischvorgang in einem Mischer zum Erhalt einer Bindemittelsuspension,
(b) Aussetzen der Bindemittelsuspension, vorzugsweise im Mischer, einem chemischen Treibmittel in partikulärer Form das durch chemische Reaktion ein Gas generiert, insbesondere chemische Reaktion mit Wasser, zum Erhalt einer Porenbetonmischung, und
(c) Verfüllen der Porenbetonmischung in eine Form, zumindest teilweises Aushärten der Porenbetonmischung in der Form in einer Kammer bei erhöhter Temperatur unter Umgebungsdruck in einer Wasserdampfatmosphäre unter Zufuhr von Heißdampf zur Herstellung eines ausgehärteten Porenbetonformkörpers, wobei die Porenbetonmischung bei einer erhöhten Temperatur von 50 bis 85°C in der wasserdampfhaltigen Atmosphäre ausgehärtet wird.

Kennzeichen der vorliegenden Erfindung ist die Herstellung der Porenbetonformkörper unter Umgebungsdruck. Die Verwendung von Autoklaven ist nicht notwendig.

Zunächst wird aus einer Zusammensetzung enthaltend Wasser und zumindest Zement und ggf. weitere hydraulisch oder latent-hydraulisch und/oder puzzolanisch härtenden Bindemitteln wie Flugasche, amorphes Siliziumdioxid, gemahlenen Hüttensand und/oder Puzzolane in einem Mischer ein Mischgut hergestellt (nachfolgend auch als Bindemittelsuspension bezeichnet). Der Mischer ist insbesondere als Suspensionsmischer ausgebildet.

Der Bindemittelsuspension wird ein Porenbildner zur Porenentwicklung und zum Erhalt der Porenbetonmischung zugesetzt. Dies kann im selben Mischer erfolgen, nachdem durch Mischen ein ausreichender Aufschluss der Zusammensetzung erzielt ist. Als Porenbildner werden chemische Treibmittel verwendet, welche mittels chemischer Reaktion Gase bilden. Vorteilhafterweise werden Aluminiumpartikel eingesetzt. Diese könne als Pulver als Paste oder als Dispersion in einer inerten Flüssigkeit vorliegen.

Die Porenbetonmischung wird, vorzugsweise direkt aus dem Mischer, der insbesondere als Suspensionsmischer ausgebildet ist, in flache Formen eingebracht. Dort erfolgt in einem ersten Schritt das Auftreiben unter Ausbildung der Poren (Auftreibphase).

Das Aushärten in den vorzugsweise flachen Formen (Höhe z.B. kleiner als 42,5 cm) erfolgt zumindest teilweise in Kammern in denen die Porenbetonmischung einer erhöhten Temperatur (gegenüber der Umgebungstemperatur) und einer Wasserdampfatmosphäre im Wesentlichen unter Umgebungsdruck ausgesetzt wird. So kann 80% der Endfestigkeit innerhalb von 16 Stunden erreicht werden. Da die Herstellung nicht in den üblichen langgestreckten Autoklaven erfolgt, sondern in flachen Formen, sind die so erhältlichen Porenbetonformkörper in Bezug auf Länge und Breite nicht begrenzt.

Mit dem erfindungsgemäßen Verfahren ist es möglich, vor dem Einfüllen der Porenbetonmischung eine aushärtende Mischung in die Form einzugeben, welche eine erste Schicht bildet ("Underlayer"), beispielhaft in Form einer Putzmörtel-Oberfläche. Ebenso ist es möglich, eine aushärtende Mischung auf die bereits vorgehärtete Porenbetonmischung aufzubringen, welche eine zweite Schicht ausbildet ("Overlayer"). Somit können eine oder beide Seiten des flächigen Endprodukts mit einer Nutz- oder Schutzschicht ausgestattet werden, der dann z.B. die Funktion eines Innen- oder Außenputzes übernimmt. Der besondere Vorteil besteht darin, dass diese Nutz- oder Schutzschicht nicht mehr auf der Baustelle hergestellt werden muss, sondern bereits während der Produktion hergestellt werden kann. Diese Schichten können unabhängig der Porenbetonmischung aus unterschiedlichen Materialien hergestellt werden und somit auch optisch das Endprodukt aufwerten oder wetterbeständig machen.

Allgemein ist es das Kennzeichen von Overlayer und Underlayer, dass deren Dichte größer ist als die Dichte des Porenbetons, insbesondere weist diese Schicht keine Luft oder Gasporen auf.

Over- und Underlayer haben unabhängig voneinander jeweils typischerweise mittlere Schichtstärken zwischen 1 bis 90 mm, insbesondere 5 bis 60 mm.

### Detaillierte Beschreibung der Erfindung

Nachfolgend werden die Bestandteile der Porenbetonmischung erläutert:
Das Bindemittel Portlandzementklinker oder "Zement" im Sinne dieser Erfindung ist ein anorganischer, fein gemahlener Stoff, der nach dem Anmachen mit Wasser infolge chemischer Reaktionen mit dem Anmachwasser selbständig erstarrt und erhärtet (hydraulisches Abbinden) und nach dem Erhärten auch unter Wasser fest und raumbeständig bleibt. Chemisch betrachtet ist Zement hauptsächlich kieselsaures Calcium mit Anteilen an Aluminium- und Eisen-Verbindungen, das als kompliziertes Stoffgemisch vorliegt.

Ein geeigneter Zement ist z.B. Portlandzement. Portlandzement ist hergestellt durch die Vermahlung von Klinker und Gips bzw. Anhydrit, und besteht chemisch gesehen aus ca. 58 bis 66 % Calciumoxid (CaO), 18 bis 26 % Siliciumdioxid (SiO₂), 4 bis 10 % Aluminiumoxid (Al₂O₃) und 2 bis 5 % Eisenoxid (Fe₂O₃). Nach dem Calcinieren des Kalks (CaCO₃) zu Calciumoxid, bei dem CO₂ freigesetzt wird, bilden sich beim Brennprozess im Drehrohrofen aus diesen Hauptbestandteilen Mineralien, die für die besonderen Eigenschaften von Zement von entscheidender Bedeutung sind.

Es sind aber alle unter den Bezeichnungen CEM I - Portlandzement, CEM II - Portlandkompositzement, CEM III - Hochofenzement , CEM IV - Puzzolanzement und CEM V - Kompositzement bekannten Zemente einsetzbar.

Zum Erreichen schneller Früh- und hoher Endfestigkeiten ist ein kleiner Wasser-zu-Zementwert (w/z) bzw. Wasser-zu-Bindemittelwert (W/B) in der Bindemittelsuspension erwünscht.

Eine wichtige technologische Größe bei der Herstellung des erfindungsgemäßen Porenbetons ist der Wasser-Zement-Wert (kurz: w/z-Wert) bzw. Wasser-Bindemittelwert (kurz: W/B-Wert), der die Verarbeitbarkeit der Bindemittelsuspension und die Eigenschaften des Endproduktes, wie z.B. seine Druckfestigkeit, wesentlich bestimmt. Der Wert beschreibt das Verhältnis zwischen der Masse des Anmachwassers und der Masse des Bindemittel-Feststoffes einer Mischung. Beim Mischungsvorgang sind die inneren Reibungskräfte, die Verbindungskräfte zwischen den Teilchen, der Schubwiderstand der Mischung und ebenso die Schwerkräfte zu überwinden. Daher lassen sich bewegliche Mischungen mit einem erhöhten Wassergehalt bedeutend leichter in den homogenen Zustand durchmischen. Allerdings wurde beobachtet, dass ein Zuviel an Wasser in der Mischung zu einer Verschlechterung der Qualität des ausgehärteten Endproduktes führt, insbesondere ein Festigkeitsverlust und erhöhtes Schrumpfverhalten die Folge hat. Der w/z-Wert (Wasser zu Zement Wert) der erfindungsgemäßen Mischung beträgt vorteilhafterweise unter 0,5, bevorzugt unter 0,47 und insbesondere unter 0,45.

Gasporenbildner im Sinne dieser Erfindung bestehen vorzugsweise aus Aluminium, Calciumcarbid, Chlorkalk, Wasserstoffperoxid und Ethanolaminester synthetischer Fettsäuren. Bevorzugt sind Aluminium und Aluminiumverbindungen welche mit Wasser Wasserstoff bilden. Chemische Porenbildner sind solche, die durch Umsetzung Gase bilden und werden daher vorliegend kurz Gasporenbildner genannt. Die Umsetzung kann durch Temperaturerhöhung, pH-Änderung oder Reaktion mit einem anderen Reaktanten, wie Wasser, hervorgerufen werden.

Als Gasporenbildner für den erfindungsgemäßen Porenbeton dient insbesondere Aluminiumpulver und/oder eine Paste enthaltend Aluminium. Das Aluminium reagiert mit dem Wasser und es entsteht Wasserstoff, der die Bindemittelmasse auftreibt. Dabei verursacht jedes Aluminiumteilchen die Entstehung einer Gaspore. Je nach Mahlfeinheit entstehen unterschiedliche Porendurchmesser. Je kleiner das Aluminiumteilchen, desto kleiner die Gaspore.

Bei der Herstellung von Porenbeton mittels des erfindungsgemäßen Verfahrens wird ein Gasporenbildner eingesetzt, insbesondere ein solcher der zumindest Aluminiumpartikel eines mittleren Partikeldurchmessers von kleiner 60 µm, vorzugsweise kleiner 40 µm aufweist und in bevorzugter Ausstattung kleiner als 30 µm, wobei Partikel unterschiedlicher Größe verwendet werden können, z.B. eine zumindest bimodale verteilte Partikelverteilung mit Partikelfraktionen, die ein Durchmesserverhältnis von 1 zu 2 bis 5 haben.

Durch den kleinen Partikeldurchmesser wird gewährleistet, dass der mittlere Porendurchmesser im erfindungsgemäßen Porenbeton unter 0,8 mm, vorzugsweise unter 0,4 mm beträgt und vorzugsweise größer 98% aller Poren Einzelporen sind mit einem Einzelporendurchmesser von kleiner als 0,6 mm.

Ggf. zusätzlich eingesetzte Schaumbildner bzw. Luftporenbildner können sein Luftporenbildner auf Proteinbasis, Schaumbildner auf Tensidbasis (synthetische Schaumbildner) oder Luftporenbildner auf Enzymbasis. Werden während der Mischvorgangs durch Zusatz von Schaumbildnern weitere Poren gebildet, so werden diese Poren Luftporen genannt im Unterschied zu obigen durch chemische Porenbildner gebildete Gasporen, wobei im Verhältnis mehr Gasporen (hinsichtlich der Anzahl) als Luftporen in der Matrix erzeugt werden.

Geeignete Luftporenbildner sind z.B. Eiweiß-Tenside, insbesondere Protein-Hydrolysate, insbesondere durch Abbau von Kollagen und Umsetzung mit geeigneten Acylierungsmitteln gewonnen.

Die Porengröße hat einen deutlichen Einfluss auf die Tragfähigkeit des Porenbetons. Die Festigkeit steigt mit abnehmendem Porendurchmesser, da die Abweichung der Porenform von der idealen Kugelform sinkt. Die Porengrößenverteilung hat ebenfalls einen direkten Einfluss auf den Versagensvorgang des Bauteils und damit auf die Festigkeit. Bei größeren Poren sinkt beim Versagen einzelner Teile die verbleibende Matrixquerschnittsfläche schneller und das endgültige Versagen findet bei einer geringeren Gesamtlast statt. Es ist ein deutlicher Abfall der Festigkeit bei größerem mittlerem Porendurchmesser zu erkennen. Erklärbar ist dies mit der sinkenden Anzahl von tragenden Porenwänden je Volumeneinheit bei steigendem Durchmesser.

Daraus kann gefolgert werden, dass die Gas- bzw. Luftporen, um eine hohe Tragfähigkeit und eine geringe Wärmeleitfähigkeit zu erzielen, ein hohes Gesamt-Porenvolumen im Porenbeton haben und einen mittleren Einzelporendurchmesser kleiner als 0,6 mm besitzen sollten.

Die Porenform sollte so nah wie möglich an der optimalen Kugelform liegen. Luftporen sind umso kugeliger geformt, je geringer ihr Durchmesser ist. Sowohl durch chemisches Auftreiben als auch durch physikalisches Aufschäumen können die erforderliche Menge, die Porengröße und die Porenradienverteilungen der Gas- bzw. Luftporen, zur Erreichung der physikalisch-mechanischen Eigenschaften, zielgenau und reproduzierbar eingestellt werden.

Im Falle der Porenbetonherstellung nach dem erfinderischen Verfahren bilden Gas- und ggf. auch Luftporen den wesentlichen Anteil an der Gesamtmatrix des fertigen Porenbetons mit einem Anteil von größer 40 Vol.%, vorteilhafterweise größer 60% Vol.%, wobei der Anteil an Gasporen am Gesamtporenanteil vorzugsweise bei größer 75 Vol.% liegt.

Der W/B-Wert der erfindungsgemäßen Mischung beträgt vorteilhafterweise unter 0,4, bevorzugt unter 0,38 und insbesondere unter 0,35.

Flugaschen im Sinne dieser Erfindung sind kieselsäure- und kalkhaltige Stäube, die in Elektrofiltern zur Abgasreinigung von Kohlekraftwerken abgeschieden werden. Typische Inhaltsstoffe sind SiO₂, Al₂O₃, Fe₂O₃, CaO und MgO. Kieselsäurereiche Flugaschen bestehen hauptsächlich aus kugelförmigen, partikulärem amorphem Siliziumdioxid mit puzzolanischen Eigenschaften und stammen in der Regel aus steinkohlebefeuerten Kraftwerken. Kalkreiche Flugaschen sind feinkörnige Stäube mit hydraulischen und/oder puzzolanischen Eigenschaften. Sie stammen vorwiegend aus Braunkohle-Feuerungsanlagen. Zur Erhöhung der Reaktivität können Flugaschen auch feiner aufgemahlen werden. Es ist auch möglich, Flugasche aus der Verbrennung von Reisschalen einzusetzen.

Die puzzolanische Reaktion von Flugasche ist gekennzeichnet durch einen im Vergleich zur Hydratation von Portlandzement langsameren Reaktionsverlauf und ist abhängig vom pH-Wert und dem Angebot von Calciumhydroxid. In Kombination mit Portlandzement und Wasser reagiert das Puzzolan mit dem Calciumhydroxid, das bei der Hydratation von Portlandzement entsteht und in vieler Hinsicht die schwächste Komponente des Zementsteins darstellt. Aus diesem Grund wird der Stoffumsatz der Puzzolane vom Hydratationsgrad des Zementes beeinflusst. Anstelle des Calciumhydroxids treten CSH-Phasen, die einen Festigkeitsbeitrag liefern und gleichzeitig zu einer Verringerung des Kapillarporenanteils im Zementstein führen.

Mit dieser puzzolanischen Reaktion ist auch eine Veränderung der Zementsteinporen verbunden. Zwar wird der Gesamtporenraum im Zementstein nicht bzw. nur geringfügig verändert, die Größe der Poren werden jedoch positiv beeinflusst.

Hüttensand im Sinne dieser Erfindung ist ein festes, pulverförmiges Material. Beim Schmelzen von Eisenerz im Hochofen fällt Hochofenschlacke an. Durch Granulation, d.h. durch schnelle Abkühlung der bis zu 1.500 °C heißen, flüssigen Schlacke mit Wasser entsteht Hüttensand, ein überwiegend glasig erstarrter, latent hydraulischer Stoff. Fein vermahlen entwickelt Hüttensand bei entsprechender Anregung (z.B. durch das Calciumhydroxid aus dem Zementklinker) hydraulische Eigenschaften. Je feiner gemahlen, desto höher ist die Reaktivität. Zur Anregung von Hüttensanden können auch alkalische Aktivatoren eingesetzt werden.

Die latent-hydraulische Reaktion des Hüttensands führt dazu, dass die Anfangserhärtung des Zements mit zunehmendem Hüttensandgehalt in der Mischung langsamer abläuft. Da der Hüttensand jedoch in höherem Hydratationsalter immer noch einen deutlichen Reaktionsfortschritt zeigt, weisen hüttensandreiche Zemente eine größere Nacherhärtung nach 28 Tagen auf als Portlandzemente.

Amorphes Siliziumdioxid oder Mikrosilika besteht aus feinen amorphen Partikeln und ist z.B. aus Silikastaub, der bei der Herstellung von Silicium oder Siliciumlegierungen entsteht, zugänglich. Ausgangsstoff hierfür ist z.B. Quarz, der zusammen mit Kohle in Elektroöfen bei Temperaturen ab 2500°C aufgeschmolzen wird. Neben pyrogener Kieselsäure sind auch Fällungskieselsäuren bekannt.

Puzzolane im Sinne dieser Erfindung sind kieselsäurehaltige oder kieselsäure- und tonerdehaltige Stoffe aus natürlichen Vorkommen. Sie sind vulkanischen Ursprungs (z.B. Trass, Lava) oder werden aus Tonen, Schiefer oder Sedimentgesteinen gewonnen (Phonolith). Puzzolane haben kein eigenes Erhärtungsvermögen. Sie reagieren erst dann zu festigkeitsbildenden und wasserunlöslichen Verbindungen, wenn sie nach dem Anmachen mit Wasser mit Calciumhydroxid (beispielhaft aus dem Portlandzementklinker) in Berührung kommen. Puzzolane werden als natürliches Puzzolan (P) oder als natürliches getempertes (thermisch behandeltes) Puzzolan (Q) (z.B. Phonolith) für die Zementherstellung eingesetzt. Gebrannter Schiefer (T), insbesondere gebrannter Ölschiefer, wird in einem speziellen Ofen bei Temperaturen von etwa 800 °C aus natürlichen Schiefervorkommen hergestellt.

Fein gemahlen hat gebrannter Schiefer ausgeprägt hydraulische, daneben aber auch puzzolanische Eigenschaften.

Vorteilhafterweise ist der erfindungsgemäßen Porenbetonmischung Calciumoxid (CaO) und/oder Magnesiumoxid (MgO) zugesetzt. Fein gemahlenes und kautisch gebranntes CaO und MgO quellen im Abbindeprozeß sowie auch nach dem Aushärten und dienen in der Porenbetonmischung der Schwindminimierung und können daher gezielt gegen Rissbildung eingesetzt werden.

Man unterscheidet generell in Weichbrand, Mittelbrand (auch "kautisch" genannt) und Hartbrand. Durch die Brenntemperatur erhält man unterschiedliche Reaktivitäten, die Auswirkungen hinsichtlich des Einsatzes entsprechend dieser Erfindung haben. Die Reaktionsverläufe beim Weichbrand nach Wasserkontakt sind beispielhaft schnell und heftig, beim Mittelbrand langsamer. Der Einsatz kautisch gebrannter Produkte bewirkt eine Expansion bereits in der Abbindephase aber auch im ausgehärteten Zustand und wirkt dadurch einer Rissbildung entgegen. Hartgebranntes Calziumoxid und Magnesiumoxid erzielen diese hohen Expansionseigenschaften nicht.

Bekannt ist in der Betonherstellung das Schwindverhalten, welches aus dem autogenen Schwinden des Zementsteins und aus dem Schwinden infolge Wasserverlustes entsteht. Bei der Herstellung des erfindungsgemäßen Porenbetons wird deshalb ein möglichst geringer Wasser-/ Zementwert bzw. Wasser-/ Bindemittelwert eingesetzt.

Erstaunlicherweise hat sich bei der Herstellung des erfindungsgemäßen Porenbetons ergeben, dass eine gezielte Zumischung von MgO bzw. CaO das Schrumpfverhalten und die dadurch bedingte Rissbildung minimieren bzw. sogar verhindern, wenn eine ausreichende Menge zugesetzt wird. Entscheidend hierbei ist, dass sich die Expansion im erfindungsgemäßen Porenbeton nicht in einer festen Matrix abspielt und diese dadurch zerstört, sondern insbesondere auf die erzeugten Poren wirken kann.

Die Zugabemenge konnte anhand von Versuchsreihen ermittelt werden.

Je kg Zugabe von MgO bzw. CaO auf 1 m³ mit den Maßen 1 x 1 x 1 Meter (Höhe x Breite x Länge) ergibt eine Expansion in der Matrix von 0,02019 mm/Meter.

Somit kann mit nachfolgender Formel das Schrumpfverhalten des erfindungsgemäßen Porenbetons gezielt minimiert bzw. sogar verhindert werden.

| | |
|---|---|
| Expansion je kg MgO bzw. CaO je m³ | 0,0202 mm |
| autogenes Schrumpfen je kg Zement/m³ | 0,0015 mm |
| bedeutet je kg/m³ Zement Zugabe von MgO/CaO | 0,0731 g |

Da kautisch gebranntes CaO und/oder MgO im zeitlichen Ablauf eine weitere Expansion verursachen, ist es möglich, auch das sogenannte Trockenschwinden zu kompensieren. Hierzu ist folgendes Beispiel aufgeführt:
Trockenschwinden = 1,2 %o oder 1,2 mm/m
Bedeutet Zugabe von 60 kg x 0,202 mm Expansion = 59,41 kg

Betonzusatzmittel im Sinne dieser Erfindung sind Stoffe, die dem Beton in feinverteilter Form (flüssig, pulverförmig, in bestimmten Fällen auch als Granulat oder als Paste) in geringen Mengen zugesetzt werden, um durch chemische oder physikalische Wirkung bestimmte Eigenschaften des Frischbetons oder des erhärteten Betons zu beeinflussen. Als Betonzusatzmittel im Sinne dieser Erfindung können zugeführt werden Betonverflüssiger, Verzögerer, Erstarrungsbeschleuniger, Erhärtungsbeschleuniger, Fließmittel, Proteinsäure, Dichtungsmittel und/oder organische und anorganische Stabilisatoren.

Genannt seien nach Gruppen klassifiziert Polycarboxylate, insbesondere Polycarboxylatether (PCE), Ligninsulfonate (auch Lignosulfonsäure), Melamin-Formaldehyd-Sulfonate, Naphthalin-Formaldehyd-Sulfonate, Hydroxycarbonsäuren und deren Salze (Betonverflüssiger), Tenside wie z.B. oberflächenaktive Substanzen auf Basis von modifizierten Naturprodukten etwa Wurzelharzseifen (Luftporenbildner), sowie im weiteren Emulsionen reaktiver Siloxane/Alkylalkoxysilane, Fettsäuren, Fettsäuresalze, Polymere (Kunstharzdispersionen), Farbpigmente, Kokosnußfaser, Palmölfaser, Glasfasern oder andere Fasern und deren Mischungen.

Daneben können auch Leichtzuschläge wie vorgefertigter Schaum, Styropor, Blähton, Kesselsand, Blähperlite, Blähglas, Blähschiefer, Bims, Schaumlava, Sägeabfall und ausgehärteter Abschnitt aus der Produktion von Porenbeton des erfindungsgemäßen Verfahrens Teil der Bindemittelsuspension sein.

Durch Zugabe von sogenannten Hydrophobierungsmitteln ist es möglich, die kapillare Wasseraufnahme von Porenbetonprodukten entsprechend dieser Erfindung deutlich zu verringern. Geeignet sind Hydrophobierer auf Silan-/ und Siloxanbasis sowie Hydrophobierungsmittel auf Basis von Alkali- oder Erdalkali- oder Aluminiumsalzen gesättigten oder ungesättigten Fettsäure (größer 10 Kohlenstoffatome), auch in Kombination. Besonders bevorzugt für die Herstellung des erfindungsgemäßen Porenbetons ist die Zugabe eines Hydrophobierungsmittels, z.B. auf Basis von Natriumoleat und Calciumdistearat, jeweils alleine oder in Kombination.

Andere Hydrophobierungsmittel sind oxidierte Wachse. Kennzeichen des Hydrophobierungsmittels ist ein relativ langer hydrophober organischer Rest oder Bestandteil (größer 10 Kohlenstoffatome) bezogen auf eine polare Gruppe (wie COOH oder COOM, M = Kation, z.B. Metallkation)

Das Hydrophobierungsmittel wird in einer Gesamtmenge von kleiner 0,1 Gew.%, insbesondere kleiner 0,07 Gew.%, bezogen auf die Bindemittelmenge eingesetzt, sowie besonders geeignet unter zusätzlichem Einbringen eines (insbesondere ionischen) Tensids, z.B. auf Basis Natriumlaurylsulfat, beispielsweise in einer Zugabemenge von kleiner 0,1 Gew.%, insbesondere kleiner 0,05% Gew.%, bezogen auf die Bindemittelmenge.

Überraschenderweise hat sich bei vergleichenden Rezepturen mit und ohne Zusatz von Hydrophobierern ergeben, dass Mischungen, hergestellt mit hydrophobierenden Zusätzen, hinsichtlich der Mischungsstabilität und der Porengeometrie sowie der Porenhomogenität und Porenausformung Vorteile ergeben.

Ein weiterer messbarer Effekt ist die Wasseraufnahme in der Porenbetonmatrix, gemessen durch Austrocknen im Trockenschrank bei 105°C direkt nach der Herstellung. Porenbetone nach dieser Erfindung weisen ohne Hydrophobierer einen Masseverlust zwischen 17 und 24% auf.

Porenbetone nach dieser Erfindung wei-sen bei der Zumischung von Hydrophobierern einen Masseverlust von durchschnittlich 10% und darunter auf. Dies bedeutet, dass damit auch das Trocken-schwinden maßgeblich positiv beeinflusst wird, da der Wasserverlust einen wesentlichen Anteil beim Trockenschwinden darstellt.

Je geringer die dauerhafte Oberflächenspannung vom Wasser ist, je geringer ist das Schwindmaß insgesamt. Hierzu können sogenannte SRA (shrinking reduction agent) auf Basis von Polypropylenglycol, Neopentyglycol, Polyethylenglycol oder Propylenglycol-Derivate eingesetzt werden. Langzeituntersuchungen haben ergeben, dass das Schwindmaß so um bis zu 40% minimiert werden kann.

In den Beton eingemischte superabsorbierende Polymere (SAP) nehmen Wasser auf, speichern dies und geben es langsam an den umgebenden Zementleim ab. Das von den SAP aufgenommene Wasser muss beim Anmischen zusätzlich zugegeben werden, da andernfalls die Verarbeitbarkeit des Frischbetons herabgesetzt wird. Dieses Wasser steht für die Hydratation zur Verfügung, bewirkt eine innere Nachbehandlung und vermindert das Schwinden. Während der Hydratation trocknen die Partikel aus und hinterlassen, je nach Partikelgröße und Wasseraufnahmekapazität, feine Luftporen. Dadurch können die SAP den Frost-/Tausalzwiderstand im Beton erhöhen, hohe Gehalte verringern jedoch auch die Festigkeit. Üblich sind Konzentrationen kleiner 1,0 Gew.-% vom Zementanteil. Das weiße, grobkörnige Pulver ist chemisch gesehen z.B. ein Gemisch aus Acrylsäure und Natriumacrylat mit Partikelgrößen je nach Herstellungsart von 20 bis 1000 µm.

Ebenfalls Teil der Bindemittelsuspension des erfindungsgemäßen Verfahrens kann Quarzsand der Korngröße bis maximal 2 mm und insbesondere fein aufgemahlener Quarzsand als Quarzmehl, vorzugsweise mit einem Blaine Wert ab 1000 und darunter.

Je höher der Anteil an Quarzmehl oder feinem Quarzsand in der Rezeptur ist, desto geringer ist das Trockenschwindmaß. Vergleichende Untersuchungen zwischen Rezepturen, die bezogen auf die Bindemittelmasse zwischen 20 und 25 % Quarzmehl enthalten, weisen ein um mindestens 35% geringeres Trockenschwindmaß auf.

Weiterhin können Fasern unterschiedlicher Länge bis 18 mm aus unterschiedlichen Materialien Teil der Porenbetonmischung sein, um das Schrumpfverhalten positiv zu beeinflussen und den Zusammenhalt der Matrix zu verbessern.

Die Herstellung der Porenbeton-Formkörper umfasst zumindest folgende Schritte (nicht abschließend):
a) Zusammenbringen der Komponenten und Mischen zum Erhalt der Bindemittelsuspension
b) Zusatz von Porenbildnern in die Bindemittelsuspension zum Erhalt der Porenbetonmischung
c) Bereitstellen einer Form, die ggf. zur Ausbildung eines Underlayers bereits mit eine aushärtenden Mischung versehen ist und Einfüllen der Porenbetonmischung in die Form
d) Durchführung der Treib- und Porenbildungsreaktion (Auftreibphase) in der Form
e) (weiteres) Aushärten der in der Form aufgetriebenen Porenbetonmischung zumindest teilweise in Kammern (ein partielles Abbinden findet auch schon in Schritt d) statt), wobei das Aushärten insbesondere umfasst eine Ruhephase, eine Aufheizphase, eine Aushärtephase und eine Abkühlphase als Teil des Aushärteprozesses,
g) ggf. Aufbringen eines Overlayers (ggf. auch während des Schrittes f)) und
h) Entschalen der Porenbetonformkörper.

Die Herstellung der Bindemittelsuspension und bevorzugst auch der Porenbetonmischung erfolgt durch Zusammenbringen der weiter oben beschriebenen Komponenten und Mischen in einem Mischer. Der Mischer ist vorzugsweise ein hochdrehender Suspensionsmischer (gelegentlich auch als Kolloidalmischer bezeichnet).

Die anfängliche Temperatur der Bindemittelsuspension spielt für den Festigkeitsverlauf eine wichtige Rolle bei der Frühfestigkeit. Die Reaktion einer feinkörnigen Aluminium- oder Metallkomponente in einer alkalischen Suspension ist exotherm und steigert die Temperatur der Suspension. Da Porenbetone i.d.R. keine Gesteinskörnung größer 4 mm beinhalten, kann Wärme in die Suspension i.d.R. nicht über diese eingebracht werden.

Suspensionsmischer sind an sich bekannt. In der DE 102011102988 wird ein Suspensionsmischer und ein Verfahren zur Herstellung kolloidaler Mischungen beschrieben. Auf dieses Schutzrecht wird Bezug genommen und dessen Offenbarungsgehalt durch Verweis auch zum Gegenstand der vorliegenden Erfindung gemacht. Der erfindungsgemäße Suspensionsmischer ist vorteilhafterweise zusätzlich so ausgestattet, dass während der Herstellung der Suspension die Temperatur, die Viskosität sowie der pH-Wert automatisch erfasst werden können. Geeignete Suspensionsmischer sind auch von der Firma MAT erhältlich (MAT Mischanlagentechnik GmbH).

Eine geeignete Viskosität der Suspension entsteht bei geeigneter Auswahl und Zusammensetzung der Mischungskomponenten (vergleiche Ansprüche), geeigneter Mischreihenfolge und unter Verwendung eines Suspensionsmischers, so dass die Suspension während der Zeit der Porenbildung eine ausreichende Beweglichkeit aufweist, gleichzeitig aber auch über die nötige Plastizität verfügt, um dem Bestreben der sich bildenden Poren entgegenzuwirken, die einzelnen Zellen aufzusprengen und Querwege zum Entweichen des Gases in die Umgebung zu bilden.

Der Mischvorgang besteht vorzugsweise darin, dass in einem Suspensionsmischer mit einer Umfangsgeschwindigkeit von größer 4 m/sec, insbesondere 6 bis 20 m/sec, insbesondere bevorzugt 8 bis 15 m/sec, zum Erhalt einer Bindemittelsuspension gerührt wird, auch unabhängig hiervon, für mindestens 2 min, vorzugsweise 4 bis 6 min bei vorgenannten Umfangsgeschwindigkeiten. So können feststoffreiche Bindemittelsuspensionen von niedriger Viskosität erzeugt werden.

Erstaunlicherweise wurde bei vergleichenden Mischungen zwischen der Herstellung von Bindemittelsuspensionen in Zwangsmischern und der Herstellung in Suspensionsmischern entsprechend dieser Erfindung festgestellt, dass bei identischen Betontemperaturen das Erstarren sowie Erhärten der Mischungen, hergestellt mit dem Suspensionsmischer, generell wesentlich schneller erfolgt als bei Mischungen, die mittels üblicher Zwangsmischer hergestellt wurden. Weiterhin wurde festgestellt, dass Mischungen mittels Suspensionsmischer hergestellt, eine wesentlich geringere Viskosität aufgewiesen haben. Bei weiteren, vertiefenden Untersuchungen wurde festgestellt, dass dieser Effekt sich verstärkt, je enger und öfter die Feststoffpartikel während des Mischens aneinander reiben können, also je geringer der Wasser-/Bindemittelwert ist und je länger die Mischdauer ist.

Eine Erklärung für die wesentlich schneller ablaufenden Reaktionen bei der Herstellung des erfindungsgemäßen Porenbetons mittels Suspensionsmischer ist, dass durch den Einsatz vom Suspensionsmischer die sich bei Wasserkontakt mit Zement bildende Hydrathülle durch vorgenannte Effekte zumindest teilweise "abgerieben" wird und dadurch Wasser schneller Kontakt zum Zement-/bzw. Bindemittelkorn erhält.

Im erfindungsgemäßen Verfahrensschritt der Herstellung der Suspension mittels Suspensionsmischer wird es daher ermöglicht, die erste Hydrathülle, welche sich direkt nach Wasserkontakt bildet, durch Wahl eines geeigneten Suspensionsmischers sowie Wasser-/Zement- bzw. Wasser-/Bindemittelwertes und entsprechender Mischgeschwindigkeit sowie ggf. einer Ultraschallbehandlung während des Mischvorgangs schneller aufzulösen und dadurch den Hydratationsvorgang zu beschleunigen und damit auch schneller den pH-Wert der Lösung zu erhöhen und bereits gebundenes Wasser für weitere Reaktionsabläufe und eine höhere Viskosität frei zu setzen. Unbekannt bisher ist die Steigerung der Frühfestigkeit zur Herstellung von Porenbeton entsprechend dieser Erfindung durch den Einsatz eines Suspensionsmischers unter Verwendung kleiner Wasser-/Zement- bzw. Wasser- /Bindemittelwerte sowie hoher Mischgeschwindigkeiten und ggf. Einsatz von Ultraschall.

Wichtige technologische Größen zur Herstellung des erfindungsgemäßen Porenbetons sind die Viskosität der Suspension, die Suspensionsdichte und die Suspensionstemperatur (jeweils bezogen auf die Bindemittelsuspension).

Die Zumischung der chemischen Porenbildner in die Bindemittelsuspension zum Erhalt der Porenbetonmischung erfolgt in einem weiteren Mischer oder in demselben Mischer, insbesondere wenn der erste Mischer als Suspensionsmischer ausgebildet ist. Es wurde überraschend gefunden, dass im Mischer, insbesondere im Suspensionsmischer, auf einfache und schnelle Art und Weise Porenbetone mit zusätzlichen Luftporen hergestellt werden können, ohne dass dazu der Schaum vorher und/oder parallel und/oder nachher mittels Schaumgeneratoren erzeugt und der Bindemittelsuspension in einem separaten Mischer zugefügt werden muss, weil der Schaum einfach und schnell durch Zugabe des Schaumbildners in den ersten (einzigen) Mischer oder in einen zweiten hergestellt wird und vor und/oder nach Zugabe des Bindemittels, wobei die Zugabe des Schaumbildners nach Herstellung der Bindemittelsuspension und vor Erhalt der Porenbetonmischung Festigkeitsvorteile ergibt.

In einer bevorzugten Ausführung der Herstellung des erfindungsgemäßen Porenbetons wird die Bindemittelsuspension in die Gießform (Form) eingebracht, die Gießform in die Härtekammer verbracht, dann erfolgt eine Ruhephase von 1 bis 3 Stunden unter kontrollierten Temperaturbedingungen, die einen Wärmeabfluss verhindern, bevor eine Temperaturerhöhung in einer Zeit zwischen 2 bis 4 Stunden in Form einer Rampe erfolgt, anschließend die gewählte Temperatur in der Härtekammer mittels Heißdampf aufrechterhalten wird und zum Ende des Härteprozesses eine Abkühlphase von mindestens 1 Stunde erfolgt.

Die Porenbetonmischung wird in flache Formen gefüllt. Die Herstellung von Porenbeton entsprechend dem erfinderischen Verfahren kann sowohl in Bezug auf die Länge, Breite und Höhe in hochformatigen Gießformen erfolgen als auch vorzugsweise in großformatigen, in Bezug auf Länge, Breite und Höhe. Die Formen sind vorzugsweise nach oben offen.

Bevorzugt sind Formen mit einer Breite und Höhe von jeweils größer als 1 m, vorzugsweis von größer jeweils 2 m. Vorzugsweise ist die Steighöhe auf 42,5 cm begrenzt, weil dies eine gleichmäßigere Dichte der Porenbetonmatrix gegenüber der Herstellung in höheren Gießformen ermöglicht, da weniger Gewicht auf die untere Matrix einwirkt. Daneben hat dies den Vorteil gegenüber der Herstellung in hochformatigen Gießformen, dass nach dem Einfüllen der Porenbetonmischung die flachformatigen Gießformen in Hochregallagern gestapelt werden können, wobei die Hochregallager als Härtekammer für die Temperaturbearbeitung ausgestattet sind.

In die Form können vor Einbringen der Porenbeton-Zusammensetzung Bewehrungen eingelegt werden, z.B. aus Stahl. Der Porenbeton umfließt die Bewehrung und umschließt diese nach Aushärtung. Insbesondere hat die Bewehrung die Funktion, einer Transportbewehrung, damit der ausgehärtete Porenbetonformkörper später z.B. mit einem Kran transportiert werden kann.

Die Bewehrung weist im Bereich der Außenkante des Porenbetonformkörpers ein Kopplungsglied, z.B. in Form eines Gewindes auf, das von außen zugänglich ist. Die Bewehrung kann aber auch als statisch anrechenbare Bewehrung ausgelegt werden und unterschiedliche Geometrien aufweisen.

Nach einer weiteren Ausführungsform weist der Porenbetonformkörper Ausnehmungen auf für Türen, Fenster oder Durchgänge. Diese sind durch Einlegen von Schalungsteilen in die Form herstellbar. Für die Fenster oder Durchgänge können die Zargen oder Zargenbestandteile unmittelbar in die Form eingelegt werden.

Weiterhin sind Versorgungsrohre in die Form einlegbar, z.B. in Form von Kunststoffrohren, und werden dort vor Einbringen der fließfähigen Porenbeton-Zusammensetzung fixiert.

In der Auftreibphase setzt sich der Gasbildner chemisch um, und entwickelt die Poren. Dies erfolgt i.d.R. bei Raumtemperatur. Die Auftreibphase ist i.d. R. nach 1 h abgeschlossen. Die Auftreibphase wird vorzugsweise bei Raumtemperatur (20°C) oder in einer auf 20 bis 40 °C Umgebungstemperatur eingestellten Kammer durchgeführt. Typischerweise beträgt die Auftreibphase mindestens 20 min.

An die Auftreibphase schließt sich eine Ruhephase als Teil des Aushärteprozesses an. Während der Ruhephase erfolgt kein Längen- oder Dickenanstieg mehr. Während der Ruhephase ist darauf zu achten, dass die aufgetriebene teilausgehärtete Porenbetonmasse nicht zusammenfällt. Eine Bewegung, z.B. in Form eines Verfahrens, ist zu vermeiden. Die Umgebungstemperatur der Form sollte vorzugsweise mindestens der Temperatur der Porenbetonmasse (die sich durch die Hydratation und/oder Porenbildung erwärmt hat) auf der Oberfläche entsprechen, vorzugsweise um 10 bis 20°C höher sein. Dies macht in der Regel eine Erwärmung der Umgebung um 10°C bis 20°C gegenüber der Umgebungstemperatur während Auftreibphase erforderlich. In der Ruhephase wird eine Temperatur von 35 bis 45°C nicht überschritten

Die Ruhephase ist vorzugsweise 60 bis 240 min, vorzugsweise 120 bis 180 min, lang. An die Ruhephase schließt sich eine Aufheizphase an. Die Aufheizphase kann z.B. dann beginnen, wenn die Porenbetonmischung ausgelöst durch die exotherme Hydratation eine Temperaturerhöhung erfährt, ohne von außen einen Temperaturgradienten zu erfahren. In der Ruhephase ist die Umgebung Umgebungsluft.

In der Aufheizphase, die in der Kammer stattfindet, wird die teilausgehärtete Porenbetonmasse mit einem Temperaturgradienten von höchstens 20°C pro Stunde erwärmt, bezogen auf die Temperatur des in die Kammer geleiteten Dampfgases. Eine typische Startemperatur für die Aufheizphase beträgt 35°C bis 45° und endet maximal bei 60 bis 85°C. Das untere Ende des Bereichs von 60 bis 85°C, d.h. der Bereich von 50 bis 60°C ist für bezogen auf das Gewicht überwiegend auf Zement relativ zur Flugasche basierten Porenbetonen bevorzugt, das obere Ende von 70 bis 85°C für Porenbetone, die bezogen auf das Gewicht mehr Flugasche als Zement enthalten.

An die Aufheizphase schließt sich die Aushärtephase an, die ebenfalls in der Kammer stattfindet. Während dieser wird der Porenbetonkörper bei +/- 10°C (vorzugsweise +/- 3°C) der Temperatur des Endes der Aufheizphase gehalten, vorzugsweise für 120 bis 240 min. Dies sind Temperaturen von 50 bis 85°C, vorzugsweise für 60 bis 85°C. Während der Aufheizphase und der Aushärtephase ist die Umgebung wasserdampfgesättigt und die Temperatureinstellung erfolgt durch in die Kammer eingeblasenen Heißdampf.

Die Abkühlphase wird vorzugsweise durch Einsprühen von kühlerem Wasser in die Kammer eingeleitet. Die Abkühlung erfolgt vorzugsweise mit 10 bis 30°C pro Stunde bezogen auf die Kammer. Die Verweilzeit des Porenkörpers in der Kammer in der Abkühlphase beträgt mindestens 30 min, vorzugsweise mindestens 60 min.

Die Erhärtung und Aushärtung des erfindungsgemäßen Porenbetons erfolgt in Härtekammern (hierin auch Klimakammern oder nur Kammern genannt).

Härtekammern sind Kammern in denen die Gießformen nach dem Einfüllen der Suspension eingelagert werden und welche über eine Technologie verfügen, die es ermöglicht, gezielt und programmgesteuert Wärme und Feuchtigkeit in der Kammer zu erzeugen. Hierbei wird vorzugsweise Heißdampf in die Kammer geleitet wobei die Kammertemperatur und, wenn gewünscht, auch die Porenbetontemperatur gemessen werden kann und eine zeitgesteuerte, kontinuierliche Erhöhung der Kammertemperatur bis zur vorgegebenen Kammertemperatur erfolgt und diese Temperatur zeitgesteuert über eine vorgegebene Zeit konstant gehalten wird.

Die Kammer weist nach einer bevorzugten Ausführungsform mehrere Türen auf, insbesondere für jede Form eine Tür, die sich öffnet um die Form aufzunehmen und vorzugsweise auch um sie nach Behandlung in der Kammer nach Außen abzugeben.

In einer bevorzugten Ausführungsform erlaubt es die Kammer mehrere Formen übereinander zu stapeln und gleichzeitig der erwünschten Temperatur und Feuchte auszusetzen, z.B. 2 bis 6 Formen. Mehrere Kammern können als Turm ausgebildet sein, indem die Kammern übereinander angeordnet werden.

Bei hydraulisch abbindenden Inhaltsstoffen mit Hauptanteil von Zement läuft die Aushärtung in im Wesentlichen 3 Schritten wie folgt ab. Zuerst erfolgt das Ansteifen (ca. 1 Std.), danach das Erstarren (ca. 12 Std.) und dann das Erhärten (28 Tage bis zum Erreichen der Normfestigkeit). Bei Verwendung von Flugasche und Hüttensand als Betonzusatzstoff oder als teilweisen Ersatzstoff für Zement erfolgt die Festigkeitsentwicklung langsamer, die Normfestigkeit wird z.B. erst nach 56 Tagen erreicht. Generell erfolgt eine weitere Nachhärtung. Nach ca. 60 Minuten stellt sich i.d.R. eine weitere Temperaturerhöhung durch die in diesem Temperaturbereich schnell ablaufende Hydratation ein.

Das Entschalen der Porenbetonformkörper kann erst erfolgen, wenn eine ausreichende Festigkeit in der Form erreicht wird. Der früheste Zeitpunkt ist das Erreichen einer sogenannten "Grünstandsfestigkeit". Diese kann mittels Penetrometer gemessen werden. Das Penetrometer ist ein Messmittel zur Bestimmung des Eindringwiderstands eines Körpers in einen anderen und wird zur Überprüfung des Erhärtungszustandes und der Schneidefähigkeit eingesetzt.

Eine Zielsetzung des erfindungsgemäßen Verfahrens ist es, die Festigkeitsentwicklung zu beschleunigen, um sowohl ein schnelles Entschalen zu ermöglichen als auch eine, gegenüber der bekannten Festigkeitsentwicklung, stark beschleunigte Aushärtung der erfindungsgemäßen Porenbetonprodukte zu ermöglichen, so dass der Aushärteprozess in Bezug auf die Endfestigkeit zu mindestens zu 80% nach 12 Stunden abgeschlossen ist.

Erstaunlicherweise hat sich bei vergleichenden Prüfungen zwischen Porenbeton nahezu gleicher Dichte mit dem erfindungsgemäßen Verfahren hergestellt und Po-renbeton mit Autoklaven hergestellt ergeben, dass die kapillare Wasseraufnahme, geprüft nach DIN EN 772-11 beim erfindungsgemäß hergestellten Porenbeton weniger als 50% gegenüber mittels Autoklaven hergestelltem Porenbeton beträgt. Noch erstaunlicher war der Unterschied der Wasseraufnahme, geprüft in Anlehnung an DIN EN 772-11, nach 36 Stunden. Der erfindungsgemäße Porenbeton hat rezepturabhängig zwischen 4% und 25% Massegewicht an Wasser, der mittels Autoklaven mehr als 50% Massegewicht an Wasser aufgenommen.

Das Erstarren und Erhärten des erfindungsgemäßen Porenbetons kann gegenüber dem Erstarren und Erhärten bei Temperaturen unter 15°C oder darunter beschleunigt werden, wenn die Bindemittelsuspensionstemperatur vor Zugabe des Porenbildners größer 15°C beträgt, insbesondere größer 20°C. Auch ist es in der Regel vorteilhaft, wenn ein nachfolgender Wärmeabfluss und Feuchtetransport aus dem Porenbeton während des Ansteifens, Erstarrens und Erhärtens verhindert wird. Durch die exothermen Reaktionen der Hydratation der Bindemittel sowie des Porenbildners steigt die Betontemperatur innerhalb von 60 Minuten um weitere 6 bis 12°C, während die Porenbildung in dieser Zeit abgeschlossen wird. Die sich bildenden Gas- und Luftporen erzeugen eine geringe Wärmeleitfähigkeit des sich nunmehr gebildeten Porenbetons.

Ein Wärmeabfluss kann durch verschiedene Maßnahmen verringert bzw. verhindert werden, beispielhaft durch isolierte Formen oder durch eine Umgebungstemperatur, die mindestens gleich hoch ist. Wenn der Beton in isolierten Formen aushärtet, welche nach Erreichen der Grünstandsfestigkeit allseits geschlossen werden, so dass kein Wasser aus der Form entweichen kann, werden die vorgenannten Temperaturen durch die exothermen Vorgänge erreicht und über einen längeren Zeitraum von bis zu 24 h gehalten.

Eine Temperaturerhöhung kann aber auch durch andere, geeignete Wärmebehandlungsmaßnahmen erzielt werden. Hierzu gehören beispielhaft Wärmekammern ohne und insbesondere mit Wasserdampf, Erwärmen der Formen, Ausnutzung von direkter Sonneneinstrahlung etc.

Auch ist es möglich, im Produktionsprozess der Herstellung des erfindungsgemäßen Verfahrens gezielt Oberflächen der Produkte zu gestalten, indem vor dem Einbringen der Porenbetonmasse eine Masse unterschiedlicher Materialien in die Form gegeben wird, auf die nach entsprechender Vorhärtung die Porenbetonmasse aufgelegt wird und danach dem Härtungsprozess zugeführt wird. Ebenso ist es möglich, nach dem Auftreiben der erfindungsgemäßen Porenbetonmischung und entsprechender Festigkeit eine Masse in die Form einzugeben, um sowohl eine gestaltete Oberfläche zu erzeugen, als auch die Stein-/ bzw. Produkt-höhe herzustellen, ohne den Treibdeckel mechanisch zu bearbeiten, um definierte Steinmaße oder Wandelemente herzustellen. Auch die Kombination beider Herstellungsarten ist möglich und somit sind 2 Sicht-/ bzw. Nutzflächen mit einem Porenbetonkern herstellbar.

Beim erfindungsgemäßen Verfahren ist es möglich, vor der Eingabe der Porenbetonmischung eine Betonmischung in die Form einzugeben ("Underlayer"), welche als Nutz- und Schutzschicht ausgestattet werden kann, beispielhaft als Putzmörtel. Ebenso ist es möglich, diese Betonmischung auf die bereits vorgehärtete Porenbetonmischung aufzubringen ("Overlayer"). Somit kann zumindest eine Seite der Endprodukte als Nutzschicht hergestellt werden, es ist aber auch möglich, beide Seiten des Endproduktes aus einer Nutzschicht herzustellen.

Der besondere Vorteil besteht darin, dass diese Nutzschicht nicht mehr auf der Baustelle hergestellt werden muss, sondern bereits während der Produktion hergestellt werden kann. Diese Schichten können unabhängig der Porenbetonmischung aus unterschiedlichen Materialien hergestellt werden und somit auch optisch eine Verwendungs- und Nutzfläche darstellen.

Allgemein ist es das Kennzeichen von Overlayer und Underlayer, dass deren Dichte größer ist als die Dichte des Porenbetons.

Dadurch können auf kleiner Grundfläche und entsprechender Höhe der Hochregallager der Härtekammer eine Vielzahl von Formen gestapelt und einer Temperaturbehandlung unterworfen werden. Diese Art der Herstellung ermöglicht auch den Einsatz verschiedenster Sägetechnologien zur Formatierung zu Mauersteinen, was bei einer üblicherweise Herstellung in hohen Gießformen, aufgrund der Höhe der so hergestellten Blöcke, das Sägen mit industrieüblicher Sägetechnologie erschwert, kostenintensiv bzw. unmöglich macht. Die vorzugsweise flache Herstellungsart ermöglicht auch die Herstellung ganzer Wandelemente aus Porenbeton und die Verwendung bewährter Technologie aus der Betonfertigteilindustrie. Dadurch ist es auch möglich, ganze Wände mit einer Bewehrung auszustatten.

Under- bzw. Overlayer, die während der Herstellung aufgebracht werden, können hergestellt sein aus unterschiedlichen Putzmörteln:
- Normalmörtel
- Leichtmörtel
- Edelputzmörtel
- Einlagenputzmörtel für außen
- Sanierputzmörtel oder
- Wärmedämmputzmörtel

Geeignete Putzmörtel sind solche nach DIN V 18550:
MG 1 - Kalkmörtel, Gemisch aus Sand und gelöschtem Kalk (Sumpfkalk, Fettkalk bzw. Kalkmilch); der gebrannte Kalk wird durch thermische Zersetzung von Calciumcarbonat hergestellt (siehe Technischer Kalkkreislauf und Kalkbrennen), bei Direktverarbeitung spricht man von Heißkalkmörtel
MG 2 - Kalkzement/hydraulischer Mörtel und Kalkzementmörtel (Gemisch aus Sand, Kalk/Kalkhydrat und Zement)
MG 2a - Kalkzementmörtel
MG 3 - Zementmörtel (Gemisch aus Sand und Zement)
MG 3a - Zementmörtel, = 20 N/mm2
MG 4 - Gipsmörtel (Gemisch aus Sand und Gips)

Neben der Schutz- und Gestaltungsfunktion haben Over- oder Underlayer die Funktion Oberflächenrisse im Porenbetonformkörper zu verhindern bzw. wenn diese trotzdem entstehen zu überdecken.

Überdies kann der Overlayer entsprechend der Wunschstärke des Porenbetonformkörpers aufgetragen werden und so etwaigen Schwund oder einen Treibdeckel ausgleichen. Porenbetonmauerwerk sowie Porenbeton-Wandplatten sind Rohbauteile und müssen im Außenbereich durch eine Oberflächenbehandlung dauerhaft vor witterungsbedingten, umweltbedingten, mechanischen und chemischen Einflüssen geschützt werden. Oberflächenbehandlungen dienen auch dazu, das Bauwerk optisch zu gestalten. Auch im Innenbereich wird in der Regel der Porenbeton geschützt bzw. einer Oberflächenbehandlung unterzogen. Als Oberflächenbehandlung werden Putzmörtel und/oder Beschichtungen eingesetzt, welche zusätzlich alleine und/oder durch Einbringen von Armierungen eine rissüberbrückende oder rissverhindernde Funktion haben.

### Ausführungsbeispiel 1:

In einem Suspensionsmischer wurde zuerst ein Teil vom Wasser, danach Zement und Fließmittel mit einem Wasser/Zementwert von 0,25 und bei einer Umfangsgeschwindigkeit von 14 m/s eingegeben, anschließende wurde der feingemahlene Quarzsand mit Blainwert ca. 1.000 dazu gegeben, nach einer Mischzeit von 90 Sekunden wurde das restliche Wasser und Tensid und das restliche Fließmittel eingegeben, danach die Umfangsgeschwindigkeit auf 11 m/s reduziert und die Flugasche eingegeben, anschließend das CaO, danach der Propylenglykolether und der Hydrophobierer und danach wurde die Umfangsgeschwindigkeit auf 6 m/s reduziert und das Aluminium-Pulver dazugegeben. 15 s nach Zugabe vom Aluminium wurde die Mischung in die Form gegeben.

Die Form wurde in die Klimakammer verbracht und bei einer Umgebungstemperatur von 35°C für 150 Min. gelagert. Anschließend wurde mittels Sattdampf innerhalb von 180 Minuten die Kammertemperatur kontinuierlich auf 75°C gesteigert. Nach Erreichen der 75°C wurde diese Temperatur über Sattdampf für 210 Min. aufrecht gehalten. Anschließend wurde die Temperatur auf 40°C abgesenkt und nach 90 Min. die Form aus der Kammer entnommen. Während der gesamten Wärmebehandlung wurde die Betontemperatur ermittelt. Diese entsprach etwa 15 Min. zeitversetzt der Kammertemperatur.

Danach wurde der nunmehr erhärtete Porenbeton aus der Form entnommen und formatiert. Die Probekörper zur Ermittlung der Trockenrohdichte sowie der Druckfestigkeit wurde entsprechend EN 772-4 entnommen und geprüft.

| **Beispiel 1** | kg | l |
|---|---|---|
| Wasser | 116 | 116 |
| CEM I 42,5 R | 115 | 34 |
| Flugasche | 211 | 83 |
| CaO | 33 | 10 |
| Quarzsand Blaine 1000 | 90 | 37 |
| Verflüssiger PCE | 0,45 | 0,42 |
| Alkylethersulfat | 0,15 | 0,29 |
| Propylenglykolether | 0,85 | 0,82 |
| Calciumstearat | 0,45 | 0,42 |
| Aluminium | 0,78 | 729 |
| Summe | 568 | 1011 |

| | |
|---|---|
| W/B-Wert | 0,323 |
| Trockenrohdichte in kg/m³ | 496 |
| Druckfestigkeit nach in 24h N/mm² | 3,5 |
| Wasseraufnahme DIN EN 772-11 nach 90 min. Gew.% | 1,8 |
| Wasseraufnahme DIN EN 772-11 nach 72h in Gew.% | 1,8 |

Autoklavierter Porenbeton Dichte 500 kg/m³ (Vergleich)

| | |
|---|---|
| Wasseraufnahme DIN EN 772-11 nach 90 min. in Gew.% | 22,8 |
| Wasseraufnahme DIN EN 772-11 nach 72 h in Gew.% | 67,1 |

### Ausführungsbeispiel 2:

Eine identische Mischung wie für *Ausführungsbeispiel 1* wurde unter identischer Vorgehensweise hergestellt. Ein Teil der Mischung wurde nicht in die Klimakammer verbracht um zu untersuchen, welchen Einfluss die Wärmebehandlung auf die Festigkeitsentwicklung hat. Die Mischung wurde ohne Abdeckung im Labor bei einer Temperatur von 23°C und einer Luftfeuchtigkeit von 65% bis zur Prüfung der Druckfestigkeit und Trockenrohdichte gelagert. Die Ergebnisse werden wie folgt gegenübergestellt:

| | Wärmebehandlung Ohne | mit |
|---|---|---|
| W/B-Wert | 0,323 | 0,323 |
| Trockenrohdichte in kg/m³ | 481 | 496 |
| Druckfestigkeit nach in 24h N/mm² | 1,3 | 3,5 |

### Ausführungsbeispiel 2, Rezeptur CEM I 52,5R ohne Flugasche:

In einem Suspensionsmischer wurde zuerst ein Teil vom Wasser, danach Zement und ein Teil vom Fließmittel mit einem Wasser/Zementwert von 0,28 und bei einer Umfangsgeschwindigkeit von 8 m/s eingegeben, nach einer Mischzeit von 90 Sekunden wurde das restliche Wasser und Tensid und das restliche Fließmittel eingegeben, danach die Umfangsgeschwindigkeit auf 11 m/s angehoben und anschließend das CaO, danach der Propylenglykolether und der Hydrophobierer und danach wurde die Umfangsgeschwindigkeit auf 6 m/s reduziert und das Aluminium-Pulver dazugegeben. 15 s nach Zugabe vom Aluminium wurde die Mischung in die Form gegeben.

Die Form wurde in die Klimakammer verbracht und bei einer Umgebungstemperatur von 35°C für 150 Min. gelagert. Anschließend wurde mittels Sattdampf innerhalb von 180 Minuten die Kammertemperatur kontinuierlich auf 60°C gesteigert. Nach Erreichen der 60°C wurde diese Temperatur über Sattdampf für 210 Min. aufrecht gehalten. Anschließend wurde die Temperatur auf 40°C abgesenkt und nach 90 Min. die Form aus der Kammer entnommen. Während der gesamten Wärmebehandlung wurde die Betontemperatur ermittelt. Diese entsprach etwa 10 Min. zeitversetzt der Kammertemperatur.

Danach wurde der nunmehr erhärtete Porenbeton aus der Form entnommen und formatiert. Die Probekörper zur Ermittlung der Trockenrohdichte sowie der Druckfestigkeit wurde entsprechend EN 772-4 entnommen und geprüft.

| **Beispiel 2** | kg | l |
|---|---|---|
| Wasser | 225 | 225 |
| CEM I 52,5 R | 450 | 145 |
| Flugasche | 0 | 0 |
| CaO | 45 | 14 |
| Quarzsand Blaine 1000 | 0 | 0 |
| Verflüssiger PCE | 0,5 | 0,47 |
| Alkylethersulfat | 0,2 | 0,38 |
| Propylenglykolether | 3,15 | 3,03 |
| Calciumstearat | 2,25 | 2,10 |
| Aluminium | 0,69 | 644 |
| Summe | 727 | 1004 |
| W/B-Wert | 0,45 | |
| Trockenrohdichte in kg/m³ | 649 | |
| Druckfestigkeit nach in 24h N/mm² | 4,5 | |

### Ausführungsbeispiel 3:

In einem Suspensionsmischer wurde zuerst ein Teil vom Wasser, danach Zement und ein Teil vom Fließmittel mit einem Wasser/Zementwert von 0,25 und bei einer Umfangsgeschwindigkeit von 11 m/s eingegeben, nach einer Mischzeit von 90 Sekunden wurde das restliche Wasser und Tensid und das restliche Fließmittel eingegeben, danach die Umfangsgeschwindigkeit auf 9 m/s abgesenkt und anschließend das CaO, danach der Propylenglykolether und der Hydrophobierer und danach wurde die Umfangsgeschwindigkeit auf 12 m/s angehoben und das Aluminium-Pulver dazugegeben. 15 s nach Zugabe vom Aluminium wurde die Mischung in die Form gegeben.

Die Form wurde in die Klimakammer verbracht und bei einer Umgebungstemperatur von 35°C für 150 Min. gelagert. Anschließend wurde mittels Sattdampf innerhalb von 180 Minuten die Kammertemperatur kontinuierlich auf 65°C gesteigert. Nach Erreichen der 65°C wurde diese Temperatur über Sattdampf für 210 Min. aufrecht gehalten. Anschließend wurde die Temperatur auf 40°C abgesenkt und nach 90 Min. die Form aus der Kammer entnommen. Während der gesamten Wärmebehandlung wurde die Betontemperatur ermittelt. Diese entsprach etwa 10 Min. zeitversetzt der Kammertemperatur.

Nach Verlassen der Kammer hat der Porenbetonformkörper mindestens 75%, vorzugsweise 90% der Endhärte.

Danach wurde der nunmehr erhärtete Porenbeton aus der Form entnommen und formatiert. Die Probekörper zur Ermittlung der Trockenrohdichte sowie der Druckfestigkeit wurde entsprechend EN 772-4 entnommen und geprüft.

| **Beispiel 3** | kg | l |
|---|---|---|
| Wasser | 222 | 222 |
| CEM III B 42,5 L-LH/SR | 370 | 128 |
| Flugasche | 0 | 0 |
| MgO | 27,75 | 8 |
| Quarzsand Blaine 1000 | 0 | 0 |
| Verflüssiger PCE | 0,5 | 0,47 |
| Alkylethersulfat | 0,2 | 0,38 |
| Propylenglykolether | 2,59 | 2,49 |
| Calciumstearat | 1,85 | 1,73 |
| Aluminium | 0,69 | 644 |
| Summe | 626 | 1007 |
| W/B-Wert | 0,56 | |
| Trockenrohdichte in kg/m³ | 559 | |
| Druckfestigkeit nach in 24h N/mm² | 3,8 | |

## Patentansprüche

1. Verfahren zur Herstellung von Porenbetonformkörpern umfassend
(a) Aussetzen einer Zusammensetzung umfassend zumindest
- 10 bis 32 Gew.%, insbesondere bevorzugt 18 bis 25 Gew.%, Wasser, und
- größer 5 Gew.%, vorzugsweise größer 5 bis 90 Gew.%, insbesondere bevorzugt 10 bis 80 Gew.% Zement als Bindemittel,
einem Mischvorgang in einem Mischer zum Erhalt einer Bindemittelsuspension,
(b) Aussetzen der Bindemittelsuspension, vorzugsweise im Mischer, einem chemischen Treibmittel in partikulärer Form das durch chemische Reaktion ein Gas generiert, insbesondere chemische Reaktion mit Wasser, zum Erhalt einer Porenbetonmischung und
(c) Verfüllen der Porenbetonmischung in eine Form, zumindest teilweises Aushärten der Porenbetonmischung in der Form in einer Kammer bei erhöhter Temperatur unter Umgebungsdruck in einer Wasserdampfatmosphäre unter Zufuhr von Heißdampf zur Herstellung eines ausgehärteten Porenbetonformkörpers, wobei die Porenbetonmischung bei einer erhöhten Temperatur von 50 bis 85°C in der wasserdampfhaltigen Atmosphäre ausgehärtet wird.

2. Verfahren gemäß zumindest einem der vorhergehenden Ansprüche, wobei die Porenbetonmischung für 120 bei 240 min, vorzugsweise bei 60 bis 85°C, in der wasserdampfhaltigen Atmosphäre ausgehärtet wird.

3. Verfahren gemäß zumindest einem der vorhergehenden Ansprüche, wobei nach Verlassen der Kammer mindestens 75%, vorzugsweise 90%, der Endhärte erreicht werden.

4. Verfahren gemäß zumindest einem der vorhergehenden Ansprüche, wobei die Porenbetonmischung zunächst in der Form bei einer Temperatur von 35 bis 45°C für 90-180 min verweilt und vorzugsweise danach für 120 bis 180 min die Temperatur kontinuierlich auf 50 bis 85°C, insbesondere 60 bis 85°C, erhöht wird.

5. Verfahren gemäß zumindest einem der vorhergehenden Ansprüche, wobei die Porenbetonmischung neben Zement zumindest ein weiteres Bindemittel ausgewählt aus der Gruppe Flugasche, gemahlenem Hüttensand und partikulärem Siliziumdioxid enthält, wobei das weitere Bindemittel vorzugsweise einen dso Wert von kleiner 100 µm aufweist und/oder einen Blain-Wert von größer 3000, insbesondere 3000-6000.

6. Verfahren gemäß zumindest einem der vorhergehenden Ansprüche, wobei der Mischvorgang in dem Mischer mit einer Umfangsgeschwindigkeit von größer 4 m/sec, insbesondere 6 bis 20 m/sec, insbesondere bevorzugt 8 bis 15 m/sec, betrieben wird und der Mischer vorzugsweise ein Suspensionsmischer ist und einen Rotor und einen Stator aufweist; und/oder wobei der Mischvorgang bis zum Erhalt einer Bindemittelsuspension mit einer Setzfließmaß gemäß DIN EN 12350-9 von zumindest 600 mm, vorzugsweise mindestens 700 mm, durchgeführt wird.

7. Verfahren gemäß zumindest einem der vorhergehenden Ansprüche, wobei die Porenbetonmischung, vorzugsweise die Zusammensetzung, Calciumoxid, Calciumsulfat und/oder Magnesiumoxid
a) in einem Anteil von bis zu 20 Gew.%, vorzugsweise 0,5 bis 15 Gew.%, enthält oder
b) Calciumoxid, Calciumsulfat und/oder Magnesiumoxid einerseits und Bindemittel andererseits in einem Gewichtsverhältnis von 0,01 bis 0,15 zu 1 in der Zusammensetzung halten sind.

8. Verfahren gemäß zumindest einem der vorhergehenden Ansprüche, wobei die Porenbetonmischung, vorzugsweise auch die Zusammensetzung, 0 bis 50 Gew.% weitere Stoffe enthält, insbesondere Quarzmehl feingemahlen auf einen Blain-Wert kleiner 1500.

9. Verfahren gemäß zumindest einem der vorhergehenden Ansprüche, wobei die Bindemittelsuspension und vorzugsweise auch die Zusammensetzung einen Hydrophobierer in einer Menge von zumindest 0,01 Gew.%, vorzugsweise mindestens 0,03 Gew.%, enthält, insbesondere nach Zugabe der Bindemittel und vor dem Porenbildner zugegeben.

10. Verfahren gemäß zumindest einem der vorhergehenden Ansprüche, wobei in dem Mischer zuerst das Wasser vorgelegt wird und nachfolgend die Zugabe des Zements und des weiteren Bindemittels erfolgt.

11. Verfahren gemäß zumindest einem der vorhergehenden Ansprüche, wobei die Zusammensetzung bzw. die Porenbetonmischung weiterhin eines oder mehrere der folgenden Additive enthält:
a) Ethanolamin-Fettsäurester der Formel H₃₋ₚN(CH₂CH₂OCOR)ₚ mit p = 1 bis 3 und einer Kohlenstoffzahl jedes Fettsäure-Restes von 10 bis 18,
b) Verflüssiger,
c) Luftporenbildner wie Tenside,
d) Fasern,
e) Phosphate, vorzugsweise Polyphosphat,
f) Etherpolyole, insbesondere Ethylenglykol, Propylenglykol, Propylenglycolether und Dipropylenglykol-tert.-butyl-ether und deren Mischungen.

12. Verfahren gemäß zumindest einem der vorhergehenden Ansprüche, wobei
(a) das Treibmittel eine Metall-Verbindung ist, die bei der Umsetzung mit Wasser Wasserstoff bildet, vorzugsweise Aluminium, und vor deren Umsetzung insbesondere in partikulärer Form in der Porenbetonmischung vorliegt, insbesondere mit Partikel-Größen im Bereich von kleiner 60 µm; und/oder
(b) das Treibmittel ein chemisches Treibmittel ist und zu 0,01 bis 0,3 Gew.%, vorzugsweise 0,1 bis 0,2 Gew.%, der Porenbetonmischung zugesetzt werden;
und/oder
(c) das Treibmittel retardierend ausgestattet ist, so dass die Formausfüllung in kleiner 60 min und frühestens in 2 min erfolgt, insbesondere in Form einer Aluminiumpaste oder beschichtetem Pulver.

13. Verfahren gemäß zumindest einem der vorhergehenden Ansprüche, wobei die Porenbetonmischung
(a) direkt aus dem Mischer in die Form verfüllt wird und die Porenbetonmischung die Form zumindest zu 20 Vol.% ausfüllt und die Form höher als die maximale Steighöhe der Porenbetonmischung ist; und/oder
(b) nicht autoklaviert wird und vorzugsweise bei Umgebungsdruck aushärtet; und/oder
in die Form verfüllt wird und die Form flach ist, so dass eine Treibhöhe von maximal 42,5 cm, vorzugsweise maximal 32 cm, erreicht wird und mit einer Länge und Breite in der Summe, die mindestens 4-mal, vorzugsweise 10-mal, so groß ist wie die Steighöhe.

14. Verfahren gemäß zumindest einem der vorhergehenden Ansprüche, wobei die Form in Vibration versetzt wird.

15. Verfahren gemäß zumindest einem der vorhergehenden Ansprüche, wobei der ausgehärtete Porenbetonformkörper einen Underlayer und/oder einen Overlayer aufweist, vorzugsweise mit einer Schichtdicke von jeweils 10 bis 90 mm, insbesondere 0,1 bis 1,5 cm, mit jeweils keinen Poren oder mit in Bezug auf gleiche Volumina jeweils weniger als die Hälfte der Poren als der restliche ausgehärtete Porenbetonformkörper und wobei der Overlayer vorzugsweise aus selbstnivellierendem Beton hergestellt ist oder durch Abziehen mit einem Rakel und der Overlayer frühestens 120 min nach Einfüllen der Porenbetonmischung aufgebracht wird.

16. Porenbetonformkörper, wobei der Porenbetonformkörper Ausnehmungen für Fenster, Türen, in Form von Leerrohren und/oder Durchbrüchen aufweist und ein Wandelement ist, das in Bezug auf einen Porenbetonformkörper vom Fußboden bis zur Decke reicht,
wobei der Porenbetonformkörper herstellbar ist nach einem Verfahren gemäß einem der Ansprüche 1 bis 15 und das Verfahren das Aushärten der Porenbetonmischung in der Form mit Ausnehmungen für Fenster, Türen, in Form von Leerrohren und/oder Durchbrüchen umfasst.

17. Porenbetonformkörper nach Anspruch 16 mit Under- oder Overlayer, oder beidem, wobei der Underlayer oder der Overlayer oder beide in Bezug auf das Volumen weniger als die Hälfte der Poren, verglichen mit dem restlichen ausgehärteten Porenbetonformkörper, aufweisen und/oder der Underlayer oder der Overlayer oder beide eine Dichte aufweisen, die größer ist als die Dichte des Porenbetons,
wobei der Overlayer und der Underlayer erhältlich sind, indem in Bezug auf den Underlayer vor dem Einfüllen der Porenbetonmischung in die Form eine Schicht eines Putzmörtels als Underlayer in die Form eingegeben wird und in Bezug auf den Overlayer eine Schicht eines Putzmörtels auf die vorgehärtete Porenbetonmischung in der Form als Overlayer aufgebracht wird.

## Claims

1. A method for producing aerated concrete molded bodies comprising:
(a) submitting a composition comprising at least:
• 10 to 32% by weight, especially preferably 18 to 25% by weight, water and
• more than 5% by weight, preferably more than 5 to 90% by weight, especially preferably 10 to 80% by weight, cement as a binder,
to a mixing process in a mixer to obtain a binder suspension,
(b) submitting the binder suspension, preferably in the mixer, to a chemical blowing agent in particulate form, which generates a gas by chemical reaction, in particular a chemical reaction with water, to obtain an aerated concrete mixer, and
(c) addition of the aerated concrete mixture to a form, at least partial curing of the aerated concrete mixture in the form in a chamber at an elevated temperature under ambient pressure in a water vapour atmosphere with the addition of hot steam to produce a cured aerated concrete molded body,
wherein the aerated concrete mixture is cured at an elevated temperature of 50 to 85°C in the water vapour -containing atmosphere.

2. The method according to at least one of the preceding claims, wherein the aerated concrete mixture is cured for 120 to 240 minutes, preferably at 60 to 85°C, in the water vapour -containing atmosphere.

3. The method according to at least one of the preceding claims, wherein after exiting the chamber at least 75%, preferably 90%, of the final hardness is reached.

4. The method according to at least one of the preceding claims, wherein the aerated concrete mixture is first maintained in the form at a temperature of 35 to 45°C for 90-180 minutes, and preferably then for 120 to 180 minutes the temperature is gradually raised to 50 to 85°C, in particular 60 to 85°C.

5. The method according to at least one of the preceding claims, wherein the aerated concrete mixture contains beside cement at least one further binder selected from the group of fly ash, ground slag sand and particulate silicon dioxide, wherein the further binder preferably has a d₅₀ value less than 100 µm and/or a Blaine value greater than 3000, in particular 3000-6000.

6. The method according to at least one of the preceding claims, wherein the mixing process in the mixer is operated at a circumferential speed greater than 4 m/sec, in particular 6 to m/sec, in particular preferably 8 to 15 m/sec, and the mixer preferably is a suspension mixer and has a rotor and a stator; and or wherein the mixing process is carried out until obtaining a binder suspension with a slump flow according to DIN EN 12350-9 of at least 600 mm, preferably at least 700 mm.

7. The method according to at least one of the preceding claims, wherein the aerated concrete mixture, preferably the composition, contains calcium oxide, calcium sulfate and/or magnesium oxide
a) at a percentage of up to 20% by weight, preferably 0.5 to 15% by weight, or
b) calcium oxide, calcium sulfate and/or magnesium oxide on one hand and binder on the other hand are contained in the composition at a weight ratio of 0.01 to 0.15:1.

8. The method according to at least one of the preceding claims, wherein the aerated concrete mixture, preferably the composition as well, contains 0 to 50% by weight of other materials, in particular quartz flour that is finely ground to a Blaine value of less than 1500.

9. The method according to at least one of the preceding claims, wherein the binder suspension and preferably the composition as well contains a hydrophobing agent at an amount of at least 0.01% by weight, preferably at least 0.3% by weight, in particular added after adding the binder and before adding the pore generator.

10. The method according to at least one of the preceding claims, wherein first the water is added to the mixer, and then the cement and the additional binder are added.

11. The method according to at least one of the preceding claims, wherein the composition, or respectively the aerated concrete mixture, also contains one or more of the following additives:
a) Ethanol amine fatty acid of formula H₃₋ₚN(CH₂CH₂OCOR)ₚ with p = 1 to 3 and a carbon number for each fatty acid group of 10 to 18,
b) Liquifier,
c) Air pore generators such as surfactants,
d) Fibers,
e) Phosphates, preferably polyphosphate,
f) Ether polyols, in particular ethylene glycol, propylene glycol, propylene glycol ether and dipropylene glycol-tert.-butyl ether and their mixtures.

12. The method according to at least one of the preceding claims, wherein
(a) the blowing agent is a metal compound that forms hydrogen upon reacting with water, preferably aluminum, and is present, in particular in a particulate form in the aerated concrete mixture before it reacts, in particular with particle sizes within a range of less than 60 µm; and/or
(b) the blowing agent is a chemical blowing agent and 0.01 to 0.3% by weight, preferably 0.1 to 0.2% by weight is added to the aerated concrete mixture; and/or
(c) the blowing agent is endowed to be retarding so that the form is filled in less than 60 minutes and at the earliest in 2 minutes, in particular in the form of an aluminum paste or a coated powder.

13. The method according to at least one of the preceding claims, wherein the aerated concrete mixture
(a) is added directly from the mixer to the form, and the aerated concrete mixture fills out the form by at least 20% by volume, and the form is higher than the maximum rise height of the aerated concrete mixture; and/or
(b) is not autoclaved and is preferably hardened at an ambient pressure; and/or
is added to the form which is flat so that a maximum expansion height of 42.5 cm, preferably a maximum of 32 cm, is reached, and with a sum of the length and width that is at least four times, preferably 10 times, as large as the rise height.

14. The method according to at least one of the preceding claims, wherein the form is made to vibrate.

15. The method according to at least one of the preceding claims, wherein the cured aerated concrete molded body has an underlayer and/or an overlayer, preferably each with a layer thickness of 10 to 90 mm, in particular 0.1 to 1.5 cm, each with no pores or with less than one-half of the pores with respect to the same volume than the remaining cured aerated concrete molded body and wherein the overlayer is preferably produced from self-leveling concrete, or by being troweled with a squeegee, and the overlayer is applied 120 minutes at the earliest after adding the aerated concrete mixture.

16. The aerated concrete molded body, wherein the aerated concrete molded body comprises cutouts for windows, doors, in the form of ductwork and/or penetrations and is a wall element that extends from the floor to the ceiling with respect to an aerated concrete molded body,
wherein the aerated concrete molded body is producible according to a method according to one of claims 1 to 15 and the method comprises the curing of the aerated concrete mixture in the form with cutouts for windows, doors, cutouts in the form of ductwork and/or penetrations.

17. The aerated concrete molded body according to claim 16 with an underlayer or overlayer or both, wherein the underlayer or the overlay or both have with respect to the volume less than one-half of the pores in comparison to the remaining cured aerated concrete molded body, and/or the underlayer or the overlayer or both have a density that is greater than the density of the aerated concrete,
wherein the overlayer and the underlayer are obtainable in that, with respect to the underlayer, a layer of a plaster mortar is added to the form as an underlayer before adding the aerated concrete mixture and, with respect to the overlayer, a layer of a plaster mortar is applied to the pre-hardened aerated concrete mixture in the form as an overlayer.

## Revendications

1. Procédé de fabrication de corps moulés en béton cellulaire, comportant :
(a) soumettre une composition comportant au moins
- 10 à 32 % en poids, de manière particulièrement préférée 18 à 25% en poids, d'eau ; et
- plus de 5 % en poids, de préférence plus de 5 à 90 % en poids, de manière particulièrement préférée 10 à 80 % en poids de ciment en tant que liant ;
à une opération de mélange dans un mélangeur pour l'obtention d'une suspension de liant ;
(b) soumettre la suspension de liant, de préférence dans le mélangeur, à un agent d'expansion chimique sous forme particulaire qui génère un gaz par réaction chimique, en particulier réaction chimique avec l'eau, pour l'obtention d'un mélange de béton cellulaire ; et
(c) déverser le mélange de béton cellulaire dans un moule, faire durcir au moins partiellement le mélange de béton cellulaire dans le moule dans une chambre à température élevée à la pression ambiante dans une atmosphère de vapeur d'eau sous apport de vapeur surchauffée pour la fabrication d'un corps moulé en béton cellulaire durci, le mélange de béton cellulaire étant durci à une température élevée de 50 à 85 °C dans l'atmosphère contenant de la vapeur d'eau.

2. Procédé selon au moins l'une des revendications précédentes, dans lequel le mélange de béton cellulaire est durci pendant 120 à 240 min., de préférence à 60 à 85 °C, dans l'atmosphère contenant de la vapeur d'eau.

3. Procédé selon au moins l'une des revendications précédentes, dans lequel, après avoir quitté la chambre, au moins 75 %, de préférence 90 %, de la dureté finale sont atteints.

4. Procédé selon au moins l'une des revendications précédentes, dans lequel le mélange de béton cellulaire séjourne tout d'abord dans le moule à une température de 35 à 45 °C pendant 90 - 180 min., et de préférence ensuite pendant 120 à 180 min., la température est élevée en continu jusqu'à 50 à 85 °C, en particulier 60 à 85 °C.

5. Procédé selon au moins l'une des revendications précédentes, dans lequel le mélange de béton cellulaire contient, en plus du ciment, au moins un autre liant choisi dans le groupe constitué par les cendres volantes, le sable de laitier broyé et le dioxyde de silicium particulaire, l'autre liant présentant de préférence une valeur d₅₀ inférieure à 100 µm et/ou une valeur Blain supérieure à 3000, en particulier de 3000 - 6000.

6. Procédé selon au moins l'une des revendications précédentes, dans lequel l'opération de mélange dans le mélangeur est mise en oeuvre à une vitesse périphérique supérieure à 4 m/s, en particulier de 6 à 20 m/s, de manière particulièrement préférée de 8 à 15 m/s, et le mélangeur est de préférence un mélangeur à suspension et présente un rotor et un stator ; et/ou dans lequel l'opération de mélange est réalisée jusqu'à l'obtention d'une suspension de liant ayant une mesure d'écoulement d'affaissement selon DIN EN 12350-9 d'au moins 600 mm, de préférence d'au moins 700 mm.

7. Procédé selon au moins l'une des revendications précédentes, dans lequel le mélange de béton cellulaire, de préférence la composition, contient de l'oxyde de calcium, du sulfate de calcium et/ou de l'oxyde de magnésium
a) dans une proportion de jusqu'à 20 % en poids, de préférence de 0,5 à 15 % en poids, ou
b) l'oxyde de calcium, le sulfate de calcium et/ou l'oxyde de magnésium d'une part, et le liant, d'autre part, sont maintenus dans la composition dans un rapport pondéral de 0,01 à 0,15 à 1.

8. Procédé selon au moins l'une des revendications précédentes, dans lequel le mélange de béton cellulaire, de préférence également la composition, contient 0 à 50 % en poids d'autres substances, en particulier de la farine de quartz finement broyée à une valeur de Blaine inférieure à 1500.

9. Procédé selon au moins l'une des revendications précédentes, dans lequel la suspension de liant, et de préférence également la composition, contient un agent d'hydrofugation dans une quantité d'au moins 0,01 % en poids, de préférence d'au moins 0,03 % en poids, ajouté en particulier après ajout du liant et avant l'agent porogène.

10. Procédé selon au moins l'une des revendications précédentes, dans lequel, dans le mélangeur, l'eau est introduite tout d'abord et par la suite l'ajout du ciment et de l'autre liant a lieu.

11. Procédé selon au moins l'une des revendications précédentes, dans lequel la composition, ou le mélange de béton cellulaire, contient en outre un ou plusieurs des additifs suivants :
a) esters d'éthanolamine et d'acides gras de la formule H₃₋ₚN(CH₂CH₂OCOR)ₚ avec p = 1 à 3 et un nombre de carbones de chaque reste d'acide gras de 10 à 18 ;
b) fluidifiants ;
c) agents entraîneurs d'air tels que des tensio-actifs ;
d) fibres ;
e) phosphates, de préférence un polyphosphate ;
f) étherpolyols, en particulier l'éthylène glycol, le propylène glycol, l'éther de propylène glycol et l'éther tert-butylique de dipropylène glycol et leurs mélanges.

12. Procédé selon au moins l'une des revendications précédentes, dans lequel
(a) l'agent d'expansion est un composé métallique qui forme de l'hydrogène lors de la réaction avec l'eau, de préférence l'aluminium, et avant sa réaction se présente en particulier sous forme particulaire dans le mélange de béton cellulaire, en particulier avec des tailles de particules dans la plage de moins de 60 µm ; et/ou
(b) l'agent d'expansion est un agent d'expansion chimique et est ajouté à 0,01 à 0,3 % en poids, de préférence 0,1 à 0,2 % en poids, du mélange de béton cellulaire ;
(c) et/ou
(d) l'agent d'expansion est prévu à effet retard, de telle sorte que le remplissage de moule a lieu en moins de 60 min. et au plus tôt en 2 min., en particulier sous forme d'une pâte d'aluminium ou d'une poudre enrobée.

13. Procédé selon au moins l'une des revendications précédentes, dans lequel le mélange de béton cellulaire
(a) est déversé directement du mélangeur dans le moule et le mélange de béton cellulaire remplit le moule au moins à 20 % en volume et le moule est plus haut que la hauteur de montée maximale du mélange de béton cellulaire ; et/ou
(b) n'est pas autoclavé et durcit de préférence à pression ambiante ; et/ou
est déversé dans le moule et le moule est plat de telle sorte qu'une hauteur d'expansion d'au maximum 42,5 cm, de préférence d'au maximum 32 cm, est atteinte et avec une longueur et une largeur au total qui est au moins 4 fois, de préférence 10 fois, plus grande que la hauteur de montée.

14. Procédé selon au moins l'une des revendications précédentes, dans lequel on fait vibrer le moule.

15. Procédé selon au moins l'une des revendications précédentes, dans lequel le corps moulé en béton cellulaire durci présente une sous-couche et/ou une surcouche, de préférence avec une épaisseur de couche de respectivement 10 à 90 mm, en particulier 0,1 à 1,5 cm, respectivement sans pores ou avec, en ce qui concerne les mêmes volumes, respectivement moins de la moitié des pores par comparaison avec le corps en béton cellulaire durci restant et dans lequel la surcouche est obtenue de préférence en béton auto-nivelant ou par retrait avec une racle et la surcouche est appliquée au plus tôt 120 min. après le versement du mélange de béton cellulaire.

16. Corps en béton cellulaire, dans lequel le corps en béton cellulaire présente des évidements pour fenêtres, portes, sous la forme de fourreaux et/ou de passages et est un élément de mur qui s'étend du sol au plafond en ce qui concerne un corps en béton cellulaire, le corps en béton cellulaire étant susceptible d'être obtenu selon un procédé selon l'une des revendications 1 à 15 et le procédé comportant le durcissement du mélange de béton cellulaire dans le moule avec des évidements pour fenêtres, portes, sous la forme de fourreaux et/ou de passages.

17. Corps en béton cellulaire selon la revendication 16 avec sous-couche ou surcouche, ou les deux, dans lequel la sous-couche ou la surcouche ou les deux présentent en ce qui concerne le volume moins de la moitié des pores, par comparaison avec le corps en béton cellulaire durci restant, et/ou la sous-couche ou la surcouche ou les deux présentent une densité qui supérieure à la densité du béton cellulaire,
dans lequel la sous-couche et la surcouche sont susceptibles d'être obtenues par le fait qu'en ce qui concerne la sous-couche, avant le versement du mélange de béton cellulaire dans le moule, une couche d'un mortier d'enduit est introduite en tant que sous-couche dans le moule, et en ce qui concerne la surcouche, une couche d'un mortier d'enduit est appliquée en tant que surcouche dans le moule sur le mélange de béton cellulaire pré-durci.
